Europäisches Patentamt

European Patent Office

Office européen des brevets

(11) Veröffentlichungsnummer: **0 249 920**
**A1**

# EUROPÄISCHE PATENTANMELDUNG

(21) Anmeldenummer: 87108589.0

(22) Anmeldetag: 15.06.87

(51) Int. Cl.4: **G09B 21/00**

(30) Priorität: **19.06.86 AT 1667/86**

(43) Veröffentlichungstag der Anmeldung:
**23.12.87 Patentblatt 87/52**

(84) Benannte Vertragsstaaten:
**AT BE CH DE FR GB IT LI LU NL SE**

(71) Anmelder: **SIEMENS AKTIENGESELLSCHAFT ÖSTERREICH**
**Siemensstrasse 88 - 92**
**A-1210 Wien(AT)**

(84) **AT**

(71) Anmelder: **Siemens Aktiengesellschaft Berlin und München**
**Wittelsbacherplatz 2**
**D-8000 München 2(DE)**

(84) **BE CH DE FR GB IT LI LU NL SE**

(72) Erfinder: **Chlumsky, Lubomir**
**Illekgasse 8/11**
**A-1150 Wien(AT)**
Erfinder: **Zagler, Wolfgang, Dipl.-Ing.**
**Bennoplatz 4/2/10**
**A-1080 Wien(AT)**

(54) **Kommunikationsgerät für Blinde.**

(57) Kommunikationsgerät für Blinde, das eine Grob- und Feinerfassung (Lesen) von Dokumenten ermöglicht. Hierzu sind ein Braille-Punktschrift-Tableau (8) und eine optische Abtastvorrichtung (3) für Dokumente zusammen mit einer Punkschrift-Tastatur (10) und Funktionstasten (11) in einem Koffer (1,1') zu einem tragbaren Gerät vereinigt. Die Punktschrift-Tastatur (10) und die Funktionstasten (11) ermöglichen im Zusammenwirken mit einer Editier-zeile (9) des Punktschrift-Tableaus (8) einen Dialog des Benützers mit dem Gerät, insbesondere die Um-schaltung von einer Groberfassung des Dokumentes auf die Feinerfassung eines vom Benützer auswählbaren Teiles des Dokumentes durch entsprechende Steuerung der Abtastvorrichtung (3). Auch ein Anschluß des Gerätes an herkömmliche Datenverarbeitungsanlagen ist über genormte Schnittstellen vorgesehen.

## Kommunikationsgerät für Blinde

Die Erfindung betrifft ein Kommunikationsgerät für Blinde mit einer optischen Dokument-Abtastvorrichtung für die Informationsübertragung auf eine taktiles Punkteraster.

Es ist bekannt, gedruckte Schriftzeichen für Blinde in der Weise lesbar zu machen, daß diese mit einer optischen Abtasteinrichtung zeilenweise abtastbar sind, mittels welcher sie in elektrische Signale umgesetzt werden, die mit Hilfe einer aus einer Vielzahl von verstellbaren Nadeln bestehenden Vorrichtung die Gestalt der jeweils abgetasteten Buchstaben nachbilden; diese solcherart durch Nadelstellungen abgebildeten Buchstaben werden mit Fingern abgetastet und gelesen. ·

Es ist weiters bekannt, mittels einer optischen Abtastvorrichtung erfaßte Buchstab in Braille-Punktschriftzeichen umzusetzen und diese auf taktilen Punterastern zeilenweise darzustellen, wozu in Lochrastern angeordnete Kugeln oder Stifte verwendet werden, die entsprechend jeweils gegebenen elektrischen Signalen in ihre Abtastpositionen gebracht werden.

Bei diesen bekannten Einrichtungen ist der Blinde darauf angewiesen, einen vorgegebenen Text fortlaufend zu lesen, ohne zielbewußt bestimmte Textstellen auswählen und nicht interessierende Textstellen überspringen zu können.

Die Erfindung hat sich die Augabe gestellt, ein Gerät für Blinde zu schaffen, das neben einem Einsatz in der Datenverarbeitung zugleich auch die Erschließung von gedruckten Dokumenten ermöglicht und zwar nicht nur zeilenweise, sondern im Sinne einer Grob-und Feinerfassung der Dokumente. Die Erfindung erzielt dies durch eine für den Betrieb als Datenendgerät ausgebildete Dialogeinheit, die aus einem als Darstellungsträger dienenden Punktschrift-Tableau, einer Punktschrift-Editierzeile sowie einer Punktschrift-Tastatur mit zusätzlichen Funktionstasten besteht und die einerseits zur Steuerung unterschiedlicher Abtastmoden der Abtastvorrichtung im Sinne einer Grob-oder Feiner fassung des abzutastenden Dokumentes dient und die anderseits zum Dialog mit einer Datenverarbeitungsanlage vorgesehen ist.

Eine für die Handhabung durch Blinde besonders geeignetes Gerät ist dadurch gekennzeichnet, daß die Abtastvorrichtung, das Punktschrift-Tableau kombiniert mit der Punktschrift-Editierzeile, ferner die Punktschrift-Tastatur mit zusätzlichen Funktionstasten samt Zusatzeinrichtungen für akustische Wiedergabe und Datenspeicherung sowie die Mikroprozessoren zur Durchführung der Datenübertragung und -verarbeitung im Dialog mit dem Benützer und schließlich die Schnittstellen für die Kommunikation mit externen elektronischen Einheiten in einem tragbaren Gehäuse, insbesondere in einem Koffer angeordnet sind.

Eine weitere Erleichtung der Handhabung wird dadurch erzielt, daß der Koffer eine Ausnehmung für die herausnehmbare, in einem gemeinsamen Gehäuse angeordnete Punktschrift-Tastatur samt Funktionstasten besitzt.

Das erfindungsgemäße Gerät erlaubt in einfacher Weise die auf dem Punktschrift-Tableau dargestellte Information durch Abrollen einer Gummiwalze über eine auf das Punktschrift-Tableau gelegte Folie (Papier oder Folie aus prägbarem Material, z.B. Kunststoff) diese einzuprägen, wodurch eine entsprechende Hartkopie der jeweiligen Information erhalten wird. Zweckmäßig besitzt der Koffer eine Ausnehmung zur Aufbewahrung einer Gummiwalze zur Herstellung von Papierkopien der am Punktschrift-Tableau dargestellten Information.

Wesentlich für den Betrieb des erfindungsgemäßen Gerätes ist, daß eine der Funktionstasten für die Umschaltung zwischen einer Dokument-Groberfassung (z.B. Darstellung der Dokumentstruktur in taktiler Form) und einer Feinerfassung (Buchstabenlesen oder Bildwiedergabe in taktiler Form) eines ausgewählten Teiles des Dokumentes vorgesehen ist.

Eine Erleichterung des Bedienung durch den Blinden ergibt sich dadurch, daß ein Summer für die akustische Signalisierung von Geräteabläufen sowie ein Lautsprecher für synthetische Sprachausgabe vorgesehen sind.

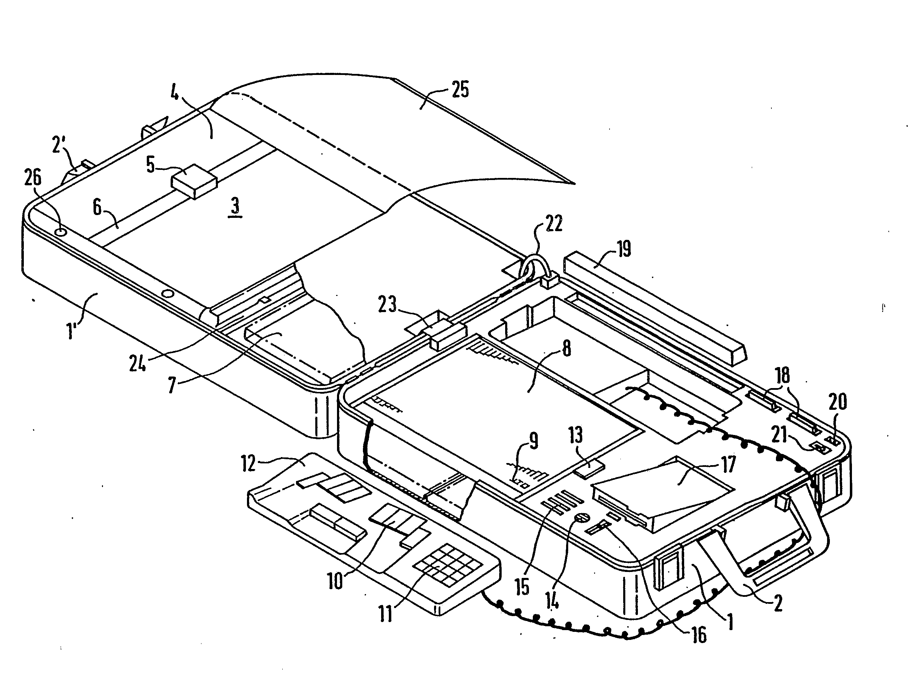

Ein Ausführungsbeispiel der Erfindung ist in der Zeichnung dargestellt.

Alle Bauteile des erfindungsgemäßen Gerätes sind in einem Koffer, dessen auseinanderklappbaren Hälften mit 1 und 1′ bezeichnet sind, angeordnet. Jede der Hälften 1,1′ ist mit je einer Hälfte 2 bzw. 2′ eines zweiteilegen Handgriffes versehen. Die Hälften 2,2′ des Handgriffes sind ergonomisch geformt und ergeben nach Zusammenklappen beider Kofferhälften 1,1′ ein leicht transportables, gegen äußere Witterungseinflüsse geschütztes Gerät. Zweckmäßig sind die Handgriffe 2,2′ so ausgebildet, daß ein unbeabsichtigtes Auseinanderklappen der beiden Kofferhälften 1,1′ verhindert wird.

Wesentlicher Bestandteil der in der Zeichnung links dargestellten Kofferhälfte 1′ ist eine optische Abtastvorrichtung 3, die im einzelnen aus einer durchsichtigen Lesegutauflage 4, einem optischen Abtastkopf 5 besteht, der im einzelnen eine Aufnahmekamera, eine Beleuchtung und einen Analog-Digital-Wandler zu einer Umsetzung von Bild-oder Schriftzeichen in Digitalsignale enthält. Der Abtastkopf 5 ist mittels eines motorisch angetriebenen Führungsteiles 6 in ebenen Koordinaten bewegbar.

Die vom Abtastkopf 5 gelieferten Digitalsignale werden in einem Mikroprozessor 7 gemäß dem jeweiligen Steuerbefehl verarbeitet. Eine der wesentlichen Funktionen des erfindungsgemäßen Gerätes ist die Informationsumsetzung des Inhaltes eines auf die Lesegutauflage 4 aufgelegten Dokumentes auf ein Punktschrift-Tableau 8.

Die Erfindung beruht darauf, daß grundsätzlich zwei verschiedene Arten von Informationen über das Dokument gewonnen werden können, nämlich einerseits eine Groberfassung, mit der die Struktur der auf dem Dokument befindlichen Gesamtinformation erkannt wird und anderseits eine Feinerfassung von Text-, Bild-oder Graphikblöcken entsprechend der jeweiligen Auswahl des Benützers. Im Falle der Groberfassung wird die Grundstruktur des aufgelegten Dokumentes auf dem Punktschrift-Tableau 8 in einer Punktedarstellung wiedergegeben, um dem Benützer die Auswahl eines bestimmten Blockes zu ermöglichen. Die Feinerfassung erlaubt hingegen eine Darstellung des Textes des jeweils ausgewählten Blockes in Braille-Punktschriftzeichen. Auch Graphikblöcke können durch die Feinerfassung mit erhöhter Auflösung auf dem Punktschrifttableau erkennbar gemacht werden.

Im allgemeinen vollzieht sich die Arbeit am Kommunikationsgerät in der Weise, daß der Benützer das Dokument, z.B. die Seite eines Buches auf die Lesegutauflage 4 auflegt und zunächst die Grobstruktur dieser Seite analysiert. Sodann - schaltet er die Ausgabe auf Feinerfassung um (Lesen eines interessierenden Textblockes oder Darstellung eines bestimmten Graphikblockes). Hierzu bedarf es eines Dialoges des Benützers mit dem Gerät.

Zur Durchführung der Dialogoperationen ist einerseits zur Information des Benützers eine Editierzeile 9 vorgesehen, auf der aus dem Gerät kommende Anweisungen in Punktschrift abgelesen werden können. Zur Eingabe von Befehlen des Benützers an das Gerät ist anderseits eine Punktschrift-Tastatur 10 mit zusätzlichen Funktionstasten 11 vorgesehen. Die Punktschrift-Tastatur 10 ist mit den Funktionstasten 11 in einem eigenen, aus der Kofferhälfte 1 herausnehmbaren Gehäuse 12 untergebracht. Eine dieser Funktionstasten 1 die Umschaltung zwischen einer Dokument-Groberfassung und einer Feinerfassung eines ausgewählten Teiles des Dokuments vorgesehen.

Zur Herabsetzung der Wartezeiten beim Lesen ist eine Quittiertaste 13 vorgesehen, die ein erneutes Einschreiben in die bereits gelesene Hälfte des Punktschrift-Tableaus 8 einleitet, während die andere Hälfte noch vom Benützer gelesen wird.

Im erfindungsgemäßen Kommunikationsgerät sind zur Erleichterung der Bedienung und der Auswertung Zusatzeinrichtungen einerseits zur akustischen Signalisierung von Geräteabläufen und anderseits zur Wiedergabe von Information vorgesehen. Als Signalgeber dient ein Summer 14; die Informationswiedergabe erfolgt durch einen Sprachsynthesizer mittels eines Lautsprechers 15, dessen Lautstärke mittels eines Stellers 16 einstellbar ist.

Ein integriertes 3,5″-Mikrofloppy-Laufwerk 17 dient der Ein-und Ausgabe von Daten. Aufgrund der hohen Berührungssicherheit, Robustheit des Datenträgers und der hohen Speicherkapazität bei kleinen Abmessungen erweist sich das angegebene Diskettenformat als benützerfreundlich. Ein Steckerfeld 18 dient der Anschlußmöglichkeit an andere Datenverarbeitungs-und Peripheriegeräte. Damit wird dem Benützer die Kommunikation und das Arbeiten mit externen Anlagen ermöglicht.

Von der auf dem Punktschrift-Tableau 8 dargestellten Information läßt sich auf einfache Weise eine dauerhafter Abdruck auf eine Folie (Papier oder Folie aus prägbarem Material, z.B. Kunststoff) herstellen, indem man die Folie auf das Tableau 8 auflegt und mit einer Gummiwalze die gesetzten Abtastpunkte in die Folie einprägt. Die Gummiwalze ist in einem Gehäuse 19 angeordnet, für das in der Kofferhälfte 1 eine Ausnehmung vorgesehen ist.

Das Gerät kann sowohl mit Batterie als auch mit Netzanschluß über einen Stecker 20 nach Betätigung eines Schalters 21 betrieben werden. Das Stromversorgungskabel für die Abtastvorrichtung 3 und den Mikroprozessor 7 ist mit 22 bezeichnet. Die vom Mikroprozessor 7 ausgegebenen Daten werden über einen Datenbus 23 an die übrigen Geräteteile übertragen. Die sichere und lagerichtige Positionierung der Dokumente wird sowohl durch eine entsprechende Ausformung der Lesegutauflage 4 als auch durch eine am Chassis 24 angebrachte Lesegutabdeckung 25 mit Haftmagneten 26 erreicht, mit deren Hilfe das Dokument fixiert werden kann.

## Ansprüche

Kommunikationsgerät für Blinde mit einer optischen Dokument-Abtastvorrichtung für die Informationsübertragung auf ein taktiles Punkteraster, bei dem allfällige Zusatzeinrichtungen für akustische Wiedergabe und Datenspeicherung sowie Mikroprozessoren zur Durchführung der Datenübertragung und -verarbeitung im Dialog mit dem Benützer und schließlich die Schnittstellen für die Kommunikation mit externen elektronischen Einheiten in einem tragbaren Gehäuse, insbesondere in einem Koffer angeordnet sind, **gekennzeichnet durch** eine für den Betrieb als Datenendgerät ausgebildete Dialogeinheit, die aus einem als Darstellungsträger dienenden Punktschrift-Tableau (8), einer Punktschrift-Editierzeile (9) sowie einer Punktschrift-Tastatur (10) mit zusätzlichen Funktionstasten (11) besteht, die einerseits zum Dialog mit einer Datenverarbeitungsanlage dienen und von denen anderseits eine für die Umschaltung zwischen Dokument-Groberfassung (z.B. Darstellung der Dokumentstruktur in taktiler Form) und einer Feinerfassung (Buchstabenlesen oder Bildwiedergabe in taktiler Form) eines ausgewählten Teiles des Dokumentes vorgesehen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | ELEKTRONIK, Band 29, Nr. 19, September 1980, Seite 18, München, DE; "Mikroelektronik hilft Blinden" <br> * Das ganze Dokument * | 1 | G 09 B 21/00 |
| A | ELECTRONICS AND POWER, Band 8, März 1972, Seiten 84-86, Hitchin, GB; P.W.F. COLEMAN: "Computer terminals for the blind" <br> * Das ganze Dokument * | 1 | |
| A | A.F.C.E.T., "3ième Congrès, reconnaissance des formes et intelligence artificielle", 16.-18. September 1981, Nancy, FR, Seiten 145-154; J. CONTER et al.: "Un dispositif électronique de lecture de textes pour aveugles" <br> * Das ganze Dokument * | 1 | |
| A | MICROPROCESSORS AND MICROSYSTEMS, Nr. 10, Dezember 1984, Seiten 528-534, Butterworth & Co. (Publishers) Ltd, Guildford, GB; R.W. KING et al.:"Realtime braille interface for Videotex interaction" <br> * Seite 532, Spalte 2; Figuren * | 1 | |

RECHERCHIERTE SACHGEBIETE (Int. Cl.4)

G 09 B

-/-

Der vorliegende Recherchenbericht wurde für alle Patentansprüche erstellt.

| Recherchenort | Abschlußdatum der Recherche | Prüfer |
|---|---|---|
| DEN HAAG | 01-09-1987 | ODGERS M.L. |

**Europäisches Patentamt**

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 061 595 (NIXDORF AG) | | |

----

**RECHERCHIERTE SACHGEBIETE (Int. Cl.4)**

Der vorliegende Recherchenbericht wurde für alle Patentansprüche erstellt.

| Recherchenort DEN HAAG | Abschlußdatum der Recherche 01-09-1987 | Prüfer ODGERS M.L. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82